Europäisches Patentamt

European Patent Office

Office européen des brevets

(19)

(11) Publication number: **0 129 625**
**B1**

(12)                    EUROPEAN PATENT SPECIFICATION

(45) Date of publication of patent specification: **13.01.88**      (51) Int. Cl.⁴: **C 03 C 1/00,** C 03 C 3/00,
C 03 B 37/025

(21) Application number: **83306204.5**

(22) Date of filing: **13.10.83**

(54) Method of forming glass or ceramic article.

(30) Priority: **27.06.83 US 508185**

(43) Date of publication of application:
**02.01.85 Bulletin 85/01**

(45) Publication of the grant of the patent:
**13.01.88 Bulletin 88/02**

(84) Designated Contracting States:
**AT BE CH DE FR GB IT LI NL SE**

(56) References cited:
**EP-A-0 084 438**

**APPLIED OPTICS, vol. 20, no. 1, January 1981,
pages 40-47, New York, USA R.W. PHILLIPS et
al.: "Optical interference coatings prepared
from solution"**

**GLASTECHNISCHE BERICHTE, XIII.
INTERNATIONALER GLASKONGRESS, 4th-9th
July 1983, pages 834-837, Hamburg, DE. G.W.
SCHERER: "Glass from colloids"**

(73) Proprietor: **Corning Glass Works
Houghton Park
Corning New York 14831 (US)**

(72) Inventor: **Scherer, George Walter
107 Woodland Drive
Big Flats, NY (US)**

(74) Representative: **Kyle, Diana et al
ELKINGTON AND FIFE High Holborn House
52/54 High Holborn
London WC1V 6SH (GB)**

(56) References cited:
**CHEMICAL ABSTRACTS, vol. 96, no. 12, March
1982, page 229, no. 90520d, Columbus, Ohio,
USA**

Courier Press, Leamington Spa, England.

## Description

Background of the invention

The present invention relates to a method for making non-porous glass or ceramic bodies, wherein pure, homogeneous porous glass or ceramic bodies are made from particulate oxide materials such as fumed metal oxides and the porous bodies are then consolidated into dense, void-free glass or ceramic products.

The concept of making glass products at reduced temperatures by sintering a mass of glass particles is old. A number of methods for producing the mass have been considered, including slip casting, compaction, sedimentation and polymerization or condensation from solutions.

Perhaps the most common methods are the solution methods wherein solutions or suspensions of glass-forming constituents are treated to form a precipitate, polymerization product, or gel which is then dried and sintered to form glass. U.S. Patents Nos. 3,535,890, 3,678,144 and 4,112,032 describe one such approach to glass-forming wherein aqueous silicate solutions or suspensions are gelled, dried and fired to produce glasses. Disadvantages of such approaches include the need for a very prolonged and difficult drying process, and only limited product purity due to the presence of iron and other metallic impurities in the starting material. Drying treatments requiring days, weeks or months for completion are not uncommon.

Higher purity can be attained through the use of starting materials such as alkoxides in the precipitating solutions, as noted in G.B. Patent No. 2,041,913 disclosing an adaptation of such a process to the manufacture of glass optical waveguides. Again, however, the drying step is difficult and prolonged.

Slip-casting methods have long been used to produce ceramic products from particulate oxide materials, and much of the published literature deals with the technology of producing a satisfactory slip. For example, U.S. Patent No. 2,942,991 teaches the stabilization of an aqueous casting slip while S. G. Whiteway et al., in "Slip Casting Magnesia", *Ceramic Bulletin*, 40 (7) pages 432—438 (1961) discuss the advantages of non-aqueous slips. In contrast to the solution methods discussed above, vehicle removal in slip-casting is relatively quick and easy, due in part to the relatively large particle sizes of the suspended oxides. Hence gelation is easily avoided and the problem of gel fragility and cracking are not encountered, although product configuration is somewhat limited.

Attempts to adapt slip casting technology to the handling of high-purity fumed oxides have been made, as reported in U.S. Patents Nos. 4,042,361 and 4,200,445. The difficulty with fumed oxides arises in part because they are fluffy, high-surface-area materials (surface areas in the range of 25—400 $m^2/g$ with average particle sizes below 1 μm, typically 0.01—0.1 micrometres which are hard to handle and difficult to incorporate into flowable suspensions. In addition, the cast suspensions typically crack on drying in the same manner as the solution-made gels. Thus, the teaching of the aforementioned two patents is to use aqueous suspensions of fumed oxides or, in the case of US Patent No. 4200445, a suspension of a fumed oxide in a polar liquid such as a simple alcohol, to prepare a partially sintered, comminuted intermediate (particle sizes of 1—10 μm) for use as a starting material in a conventional slip casting process.

It is proposed in G.B. 2,023,571 to deposit oxide glasses of controlled composition by drying and sintering oxides from fluid suspensions on the inside of a heated silica tube. While this technique could be used to produce a composition gradient in the deposited glass, the rate of material deposition is slower than would be desired. Also, adherent, crack-free layers are difficult to obtain, and the method somewhat limits the configuration of the product.

It is therefore a principal object of the present invention to provide an improved method for making glass or ceramic products from fumed oxides by sintering methods.

It is a further object of the invention to provide a method for making a glass product of optical quality by a relatively rapid procedure which facilitates the production of pure, void-free products from a particulate suspension of fumed oxides.

Other objects and advantages of the invention will become apparent from the following description thereof.

Summary of the invention

The present invention uses stable suspensions of particulate oxides as starting materials for producing glass or ceramic products from gels, the suspensions being so constituted as to substantially simplify subsequent processing and to improve the properties of the resulting products. Although the gels provided from these suspensions must be dried under controlled conditions, drying is relatively rapid and relatively large, crack-free, porous products exhibiting excellent homogeneity are easily obtained. The porous products can readily be sintered to produce dense, void-free glass or ceramic articles.

The method of the invention broadly encompasses the following steps. First, a stable, flowable, non-aqueous suspension of a particulate oxidic material is prepared using oxides having particle sizes below about 0.5 micrometres. The oxides can be prepared, e.g., by flame oxidation and will normally have a surface area in the range of about 25—400 $m^2/g$. The suspension can be prepared by stirring, high-speed mixing, wet-milling or the like, and may be stabilized using added dispersants if necessary to prevent gelling or particle agglomeration and settling.

The use of a non-aqueous, water-free liquid vehicle and, preferably, a water-free oxide, are quite important in attaining the objects of the invention. The presence of water can cause uncontrollable gelation of the suspension. Also, the exclusion of water from the vehicle greatly alleviates preform cracking problems during subsequent processing.

The second step of the process of the invention involves forming the suspension into a selected configuration for the product and causing it to gel in that configuration. Gelling is accomplished by adding a gelling agent to the suspension after forming, in an amount effective to cause complete gelation. Casting is normally the preferred technique for forming the suspension into the desired configuration since the viscosity of the suspension, notwithstanding a rather high solids content, is normally low.

After the suspension has been formed into a selected configuration for a product and gelled in that configuration it is dried in that configuration by expelling the liquid vehicle from the pore structure thereof. The gelled configuration is maintained until the gelled intermediate has substantially dried, in order to minimize the possibility of gel distortion and cracking. By virtue of the homogeneity and relatively large pore size of the gelled material, and because the vehicle is essentially non-aqueous, drying stresses are minimized and drying can be relatively rapid without risking product cracking, so that an integral product having the configuration of the gelled suspension, except for drying shrinkage, can be obtained.

The product resulting from the above-described process is typically very homogeneous in microstructure. It can be used as dried or after partial sintering for any application wherein a pure, microporous support structure, filter, or the like is desired. Alternatively, an additional heating step wherein the product is fully sintered to a dense, void-free glass or ceramic product can be employed. The particle sizes in the dried gel are sufficiently small that sintering is easy, and a transparent glass product is readily obtained which exhibits an optical quality as good as any glass known, e.g. is good enough to be employed in the fabrication of low loss optical fibers for telecommunications.

Detailed description

The successful practice of the invention initially requires the preparation of a stable fluid dispersion of the oxide particles selected for incorporation into the desired product. By a stable dispersion is meant one wherein the particles will remain in suspension without permanent agglomeration or gelling for a time sufficient to permit the suspension to be shaped by casting or other means. Of course, some settling is permitted if the suspension can readily be established by simple mixing prior to shaping.

Particulate oxidic materials useful in preparing the suspensions, include glassy or amorphous oxides, e.g., fumed $SiO_2$, $GeO_2$, $P_2O_5$, mixtures of these fumed oxides with each other or with dopants such as $TiO_2$, $Al_2O_3$, $SnO_2$, $ZrO_2$, ZnO,

$MgO$, $Sb_2O_5$ and any other fumed oxide or oxide combination which can be prepared by flame oxidation or hydrolysis to form a glassy soot product of the required particle size. In some cases, the product of the invention will be crystalline ceramic body, and in that case, the suspended particulate oxidic material may be crystalline. Examples of crystalline materials which may be used include crystalline forms of the above oxides and any of the other constituents of conventional or commercial ceramic products which can be prepared in the necessary particle size range.

As previously noted, oxide particle size is quite important in achieving the objects of the invention. It is preferred that particle sizes for the selected oxides fall within the range of about 0.01—0.5 micrometres, corresponding to a surface area for a sample of the material in the range of about 15—100 $m^2/g$. If smaller particle sizes are used, the drying process is complicated, in some cases requiring resort to autoclave drying at temperatures above the critical point of the vehicle to achieve useful drying rates without cracking.

A variety of different ways for providing suspensions of oxide materials in liquid vehicles are known, both from the paint industry and from fundamental research in colloid chemistry. The known mechanisms for stabilizing dispersions by the prevention of particle agglomeration in the vehicle include electrical double layer formation, steric dispersion, and polar screening.

Stabilization by the technique of steric dispersion is particularly useful because the dispersant layers on the particles are thin, so that rather highly concentrated but stable suspensions may be prepared. Of course, other stabilization techniques including electrical double layer and polar screen methods may be employed, provided stable fluid dispersions capable of flocculation with a compatible gelling agent can be prepared therefrom.

Examples of vehicle which can be used with oxidic particulates such as silica and silicate glasses include hydrophobic solvents such as n-hexane, chloroform, methylene chloride or the like, and also some vehicles which are miscible with water, e.g., n-propanol. Examples of dispersants which can be used in solvents such as above described include stearic acid, stearic alcohol, and even shorter straight-chain alcohols, liquid at room temperature, such as the normal alcohols with carbon chains of 3—10 atoms.

Flocculation or gellation of a steric dispersion produced as above described is thought to involve the displacement of the dispersant from the surfaces of the oxide particles by constituents having a stronger affinity therefore than the dispersant. Water and aqueous solutions of acids or bases are agents which can accomplish this result, although water deflocculation and gellation is a rather slow process in cases where the attachment of a dispersant to the oxide particle is strong.

The present invention involves destabilizing and gelling the suspension after it has been formed into the desired configuration. It is possible to add liquid gelling agents to the fluid suspension after casting, but a more convenient procedure is to pass a gaseous gelling agent, such as NH₃ gas, over, around or through the shaped suspension to cause it to gel in the cast shape.

Because the gelled intermediate produced after casting is relatively weak and subject to cracking in the course of the shrinkage which will accompany the removal of the liquid phase. It has been found very helpful to cast the suspension onto a surface which will deform with the intermediate as it shrinks during drying. One suitable technique for accomplishing this is to line the casting mold with a deformable polymeric layer, such as a thin plastic film, which will adhere to and deform with the intermediate as it shrinks during the early stages of drying. This film can then be conveniently removed after the intermediate has attained sufficient strength in the course of the drying process.

Sintering of the dried porous glass or ceramic product body can be conveniently accomplished by heating at temperatures well below the melting points of the oxides employed. By virtue of the pore homogeneity of the dried product, resulting from controlled gellation and the avoidance of overly large agglomerates during the suspension step of the process, void-free consolidation is readily accomplished and transparent amorphous products, and even transparent crystalline products, are possible. Thus the production of glass and ceramic products at temperatures well below the melting temperatures of their oxide constitutents is considerably facilitated.

The invention may be further understood by reference to the following illustrative examples demonstrating the production of ceramic products in accordance therewith.

Example I

A vehicle mixture for a fumed oxide suspension is prepared which consists of about 150 ml chloroform as the solvent and 16.8 ml 1-propanol as the dispersant. To this vehicle is added a fumed oxide consisting of 72 grams of SiO₂ of 0.06 micrometres average particle size produced by flame oxidation, which had been fired at 1000°C for one-half hour in oxygen. Before being used this silica is dried at 200°C for 1 hour in a vacuum to remove water adsorbed in storage.

The fumed oxide is dispersed in the vehicle mixture by ball-milling the two together for about 16 hours. The suspension is then centrifuged at 2000 rpm for 10 minutes to remove any large agglomerates.

The suspension thus provided is poured into a separatory funnel for controlled transfer to a forming mold. A partial vacuum is applied to this funnel to de-air the suspension. A 3 mm Teflon® plastic tube connects the funnel outlet to a bottom inlet in the mold, which is for a preform of rod configuration.

The mold used to form the rod is a cylindrical polyethylene bag about 3.2 cm O.D.×35 cm long. The bottom inlet consists of a 0.3175 cm (1/8") Teflon® plastic tube sealed into the bottom of the bag. The top of the bag is supported and held open by a ground joint at the top of a cylindrical glass mold holder about 6.4 cm O.D.×40 cm long, into which the bag is suspended. This holder is equipped with closeable 6 mm O.D. top vents.

A valve on the separatory funnel is opened and the suspension is allowed to flow by means of gravity at about 6 ml/min. into the bottom of the bag mold. By delivering from the bottom, trapped air in the casting is avoided. Using 180 ml of the suspension, a casting approximately 3.2 cm O.D.×22 cm long is formed.

Once the bag is filled, the vents are closed and a gelling agent consisting of gaseous NH₃ is flowed into the mold holder and around and over the open bag at a rate of about 35 cc/min. for 15 minutes. This treatment is sufficient to completely gel the suspension to a semisolid gelled casting for a glass rod.

After this casting has gelled, the vents in the top of the mold holder are opened and the casting is permitted to dry. Complete drying to an integral, porous oxide preform, with some shrinkage but without cracking, is accomplished in approximately 72 hours.

The dried rod preform thus provided, now about 2.5 cm O.D.×20 cm long, is placed in a vacuum for 3 hours and thereafter heated to 1000°C in oxygen to remove any residual organic constituents. It is then further heated for consolidation to a temperature of 1500°C, in an atmosphere of helium containing 2 vol. % chlorine, to produce a transparent glass rod approximately 10 cm, long×15.6 mm O.D.

The glass rod thus provided, which is a consolidated preform for a core element of an optical waveguide fiber, is drawn into glass cane about 4 mm in diameter. It is then coated with a soot layer composed of a particulate borosilicate glass by a known flame oxidation process. This soot layer is thereafter consolidated to a transparent cladding layer and the clad preform drawn into an optical waveguide fiber with a diameter of approximately 125 µm.

The fiber thus provided has a core 19 micrometres in diameter composed of fused silica and cladding of borosilicate glass having a refractive index lower than that of silica, the fiber having a numerical aperture of 0.10. The attenuation of the fiber is 14 dB/km at a wavelength of 850 nm, the majority of this attenuation being attributed to bending losses, due to the relatively low numerical aperture of the fiber.

Example II

A vehicle mixture for a fumed oxide suspension is prepared which consists of about 408 ml chloroform as the solvent and 60.8 ml 1-propanol as the dispersant. To this vehicle is added a particulate fumed oxide consisting of 196.5 grams of colloidal silica, this silica having an average particle size of the order of 0.06 micrometres and being commercially available as OX-50 silica from Degussa, Inc. Teterboro, NJ. This silica had been heated to 1000°C for 1/2 hour in oxygen to remove bound water, and prior to use is dried at 200°C for 1 hour in a vacuum to remove adsorbed water.

The silica is dispersed in the vehicle mixture by ball-milling the two together for about 16 hours. The suspension thus provided is then centrifuged at 2000 rpm for 10 minutes. The centrifuged suspension is then poured into a separatory funnel and de-aired by the application of a partial vacuum as in Example I above.

The de-aired suspension is drawn from the funnel through a plastic tube to a glass delivery cylinder by means of a motor-drive plastic piston in the cylinder. It is then forced by the piston into a bad mold through a flexible plastic tube terminating in a 35.56 cms (14-inch) long stainless steel delivery tube, the latter tube having an inside diameter of 0.3175 cm (1/8 inch).

The bag mold is configured to provide a rod-shaped casting for the core element of an optical waveguide fiber, consisting of a polyethylene bag 4.762 cms (1-7/8″) O.D. ×35.56 cms (14″) long. One end is heat-sealed shut and the other end is held open by a ground glass joint at the top edge of a 6.35 cms (2-1/2″) O.D. ×40.64 cms (16″) long cylindrical glass mold holder into which the bag is suspended. Both the ground glass top for the mold holder and the bottom section of the mold holder are equipped with 0.635 cm (1/4″) O.D. vent tubes.

To fill the mold, the stainless delivery tube is inserted through the top vent of the mold holder and into the mold, being positioned within 1.27 cms (1/2″) of the bottom of the bag. The colloidal suspension is then injected into the bag from the delivery cylinder at a rate of about 15—30 ml/min. As the mold is filled the delivery tube is withdrawn so that air bubbles are not trapped in the suspension.

After the mold has been filled, the vents are closed and ammonia is flowed into the mold holder and around the casting at a flow rate of 35 cc/min. for 85 minutes. At the end of this interval the suspension has gelled to a semisolid casting and is ready for drying.

Drying is carried out by opening the vent holes in the mold holder, permitting the vehicle to slowly evaporate over an interval of 16 days. Final drying is then accomplished by placing the integral rod preform, now 3.81 cms (1-1/2″)×20.32 cms (8″) in size and essentially free of cracks, in a vacuum for 3 hours, and then heating it to 1000°C in oxygen for 90 minutes to remove residual organics.

Consolidation of the porous preform to clear glass is accomplished by further heating the rod to 1500°C in a helium atmosphere containing 2 vol. % $Cl_2$ gas. The transparent consolidation rod is about 10.16 cms (4 inches) long and 2.222 cms (7/8 inch) in diameter.

The transparent rod is then drawn into an optical waveguide fiber core element approximately 125 micrometres in diameter. As it is drawn, it is coated with a silicone plastic coating material having a lower refractive index than that of silica. This coating constitutes a transparent cladding element for the optical waveguide fiber. The optical attenuation of this waveguide is about 3.6 dB/km at a wavelength of 850 nm.

By virtue of the flexibility of the suspension casting and gelling techniques of the invention it is possible to form core elements, cladding elements, core-cladding combinations, and core elements of non-uniform (e.g., graded) refractive index by direct casting as above described. The latter are obtained using a layer casting technique by varying the composition of the suspension as it is being cast.

Where the article to be formed is a glass core element for an optical waveguide, the cladding element can be applied by casting a second suspension around the gelled first suspension or, alternatively, by other cladding techniques. For example, a cladding could be applied by flame hydrolysis after the casting for the core element is dried, or after it is consolidated to clear glass. A plastic cladding may be applied during or after the core element is formed from the consolidated preform by drawing.

Of course, the foregoing examples are merely representative of products which could be provided in accordance with the invention. Numerous variations and modifications of this procedure may be resorted to by those skilled in the art within the scope of the appended claims.

Thus the invention constitutes a substantial improvement over the so-called solution methods for forming silicate glasses wherein fluid compositions are gelled and the gelled intermediate dried over prolonged periods and sintered to produce microporous or non-porous glasses. Through the use of non-aqueous suspensions of particulate oxides of the above-described particle size, and the process of gelling the suspension after forming it into a product of the desired configuration, crack-free drying of the product is considerably facilitated and relatively large, crack-free products can more quickly and easily be obtained.

**Claims**

1. A method of making a glass or ceramic product which comprises the steps of:

(a) suspending a particulate oxide in a non-aqueous liquid vehicle to provide a stable fluid suspension of oxide particles, said particle having an average diameter not exceeding about 0.5 micrometers.

(b) forming the suspension into a selected configuration corresponding to that of the product to be made;

(c) destabilizing and gelling the formed suspension by adding a gelling agent thereto in an amount at least effective to produce a completely gelled intermediate;

(d) drying the gelled intermediate while maintaining the configuration thereof to provide an integral, essentially crack-free porous product having the configuration of the gelled intermediate; and

(e) consolidating the porous product by heating it to a temperature at least sufficient to sinter the porous product into a non-porous glass or ceramic product.

2. A method according to claim 1, wherein the product is a glass core or cladding element or a glass optical waveguide preform.

3. A method according to claim 1 or 2, wherein the particulate oxide is an amorphous fumed oxide having a composition which includes one or more oxides selected from the group: $SiO_2$, $P_2O_5$, $GeO_2$, $Al_2O_3$, $TiO_2$, $ZrO_2$, $ZnO$, $MgO$, $Sb_2O_5$ and $SnO_2$.

4. A method according to any of claims 1 to 3, wherein the oxide is a water-free oxide.

5. A method according to any of claims 1 to 4, wherein the oxide has a surface area of 25 to 400 $m^2/g$.

6. A method according to any of claims 1 to 5, wherein the oxide has a particle size in the range of from 0.01 to 0.5 micrometres.

7. A method according to any of claims 1 to 6, wherein the oxide is prepared by flame oxidation or hydrolysis.

8. A method according to any of claims 1 to 7, wherein the gelling agent is a gaseous gelling agent such as $NH_3$ gas.

9. A method according to any of claims 1 to 8, wherein the gelled intermediate produced in step (c) is cast onto a surface which is capable of deforming with the intermediate as it shrinks during the drying step (d).

## Patentansprüche

1. Verfahren zur Herstellung eines Glas- oder Keramikerzeugnisses, gekennzeichnet durch folgende Verfahrensschritte:

a) Suspendieren eines Partikeloxyds in einer nicht wässrigen Trägerflüssigkeit, um eine stabile Fluidsuspension von Oxydteilchen zu schaffen, wobei die Teilchen einen Durchschnittsdurchmesser aufweisen, der etwa 0,5 µm nicht übersteigt;

b) Gestalten der Suspension zu einer ausgewählten Konfiguration, die der des herzustellenden Produktes entspricht;

c) Destabilisieren und Gelieren der gestalteten Suspension durch Hinzufügung eines Geliermittels zu diesem in einer Menge, die wenigstens wirksam ist, um ein vollständig geliertes Zwischenerzeugnis herzustellen;

d) Trocknen des gelierten Zwischenerzeugnisses, wobei dessen Konfiguration beibehalten wird, um ein einstückiges, im wesentlichen rissfreies poröses Erzeugnis zu schaffen, das die Konfiguration des gelierten Zwischenerzeugnisses besitzt; und

e) Konsolidieren des porösen Erzeugnisses durch dessen Erhitzung auf eine Temperatur, die wenigstens ausreicht, um das poröse Erzeugnis in ein nicht poröses Glas- oder Keramikerzeugnis zu sintern.

2. Verfahren nach Anspruch 1, dadurch gekennzeichnet, daß das Erzeugnis ein Glaskern oder ein Mantelelement eines optischen Glaswellenleiterrohlings ist.

3. Verfahren nach Anspruch 1 oder 2, dadurch gekennzeichnet, daß das Partikeloxyd ein amorphes verdampftes Oxyd mit einer Zusammensetzung ist, welche oder mehrere Oxyde enthält, die aus der Gruppe $SiO_2$, $P_2O_5$, $GeO_2$, $Al_2O_3$, $TiO_2$, $ZrO_2$, $ZnO$, $MgO$, $Sb_2O_5$ und $SnO_2$ ausgewählt sind.

4. Verfahren nach einem der Ansprüche 1—3, dadurch gekennzeichnet, daß das Oxyd ein wasserfreies Oxyd ist.

5. Verfahren nach einem der Ansprüche 1—4, dadurch gekennzeichnet, daß das Oxyd einen Oberflächenbereich von 25—400 $m^2/g$ besitzt.

6. Verfahren nach einem der Ansprüche 1—5, dadurch gekennzeichnet, daß das Oxyd eine Partikelgröße in dem Bereich von 0,01—0,5 µm aufweist.

7. Verfahren nach einem der Ansprüche 1—6, dadurch gekennzeichnet, daß das Oxyd durch Flammoxydation oder Flammhydrolyse hergestellt wird.

8. Verfahren nach einem der Ansprüche 1—7, dadurch gekennzeichnet, daß das Geliermittel ein gasförmiges Geliermittel ist, wie beispielsweise $NH_3$-Gas.

9. Verfahren nach einem der Ansprüche 1—8, dadurch gekennzeichnet, daß das gelierte Zwischenerzeugnis, das in dem Verfahrensschritt (c) hergestellt wird, auf eine Oberfläche gegossen wird, die sich mit dem Zwischenerzeugnis zu verformen vermag, wenn dieses während des Trocknungsschrittes (d) schrumpft.

## Revendications

1. Un procédé pour fabriquer un article en verre ou céramique, qui comprend les étapes suivantes:

(a) mettre en suspension un oxyde en particules dans un véhicule liquide non aqueux pour obtenir une suspension fluide stable des particules d'oxyde, le diamètre moyen desdites particules ne dépassant pas environ 0,5 micromètre;

(b) mettre la suspension sous une forme choisie correspondant à celle du produit à fabriquer;

(c) déstabiliser et gélifier la suspension mise en forme en y ajoutant un agent gélifiant en une quantité au moins efficace produire un corps intermédiaire complètement gélifié;

(d) sécher le corps intermédiaire gélifié tout en maintenant sa forme pour obtenir un produit poreux d'un seul tenant, pratiquement exempt de fissures, ayant la forme du corps intermédiaire gélifié; et

(e) consolider le produit poreux en le chauffant à une température au moins suffisante pour fritter le produit poreux de façon à en faire un produit non poreux en verre ou céramique.

2. Un procédé selon la revendication 1, dans lequel le produit est en coeur ou élément de gainage en verre d'une préforme de guide d'onde optique en verre.

3. Un procédé selon la revendication 1 ou 2, dans lequel l'oxyde en particules est un oxyde amorphe de fumée ayant une composition qui inclut un ou plusieurs oxydes choisis dans le group: $SiO_2$, $P_2O_5$, $GeO_2$, $Al_2O_3$, $TiO_2$, $ZrO_2$, $ZnO$, $MgO$, $Sb_2O_5$ et $SnO_2$.

4. Un procédé selon l'une quelconque des revendications 1 à 3, dans lequel l'oxyde est un oxyde anhydre.

5. Un procédé selon l'une quelconque des revendications 1 à 4, dans lequel la surface spécifique de l'oxyde est de 25 à 400 $m^2/g$.

6. Un procédé selon l'une quelconque des revendications 1 à 5, dans lequel la grosseur de particules de l'oxyde est comprise dans l'intervalle de 0,01 à 0,5 micromètre.

7. Un procédé selon l'une quelconque des revendications 1 à 6, dans lequel l'oxyde est préparé par oxydation à la flamme ou hydrolyse.

8. Un procédé selon l'une quelconque des revendications 1 à 7, dans lequel l'agent gélifiant est un agent gélifiant gazeux tel que $NH_3$ gazeux.

9. Un procédé selon l'une quelconque des revendications 1 à 8, dans lequel le corps intermédiaire gélifié produit à l'étape (c) est coulé sur une surface qui est capable de se déformer avec le corps intermédiaire à mesure qu'il se rétracte pendant l'étape de séchage (d).